# FASCICULE DE BREVET EUROPEEN

(11) **EP 4 390 729 B1**
(45) Date de publication et mention de la délivrance du brevet: **19.08.2026**
(21) Numéro de dépôt: 23219680.8
(22) Date de dépôt: 22.12.2023
(51) Int. Cl.: G06F 21/16, G06N 3/09, G06V 10/26, G06V 10/764, G06V 10/774, G06V 10/82, G06T 1/00

(54) **PROCÉDÉ ET SYSTÈME DE TATOUAGE DE MODÈLE DE SEGMENTATION SÉMANTIQUE D'IMAGES MIS AU POINT PAR APPRENTISSAGE MACHINE**
VERFAHREN UND SYSTEM ZUR GEOMARKIERUNG EINES SEMANTISCHEN SEGMENTIERUNGSMODELLS VON DURCH MASCHINELLES LERNEN INITIIERTEN BILDERN
METHOD AND SYSTEM FOR WATERMARKING MACHINE-LEARNING-FOCUSED IMAGE SEMANTIC SEGMENTATION MODEL

(30) Priorité: 23.12.2022 FR 2214406
(43) Date de publication de la demande: 26.06.2024
(73) Titulaire: THALES, 92190 Meudon (FR)
(72) Inventeur: BRAULT, Romain, 92160 ANTONY (FR); Kapusta, Katarzyna, 91767 PALAISEAU (FR); THOUVENOT, Vincent, 91767 PALAISEAU CEDEX (FR); LANSARI, Mohammed, 91380 CHILLY MAZARIN (FR)
(74) Mandataire: Lavoix

(56) Documents cités:
- US-A1- 2019 370 440
- US-A1- 2021 240 803
- FRANZISKA BOENISCH: "A Survey on Model Watermarking Neural Networks", ARXIV.ORG, CORNELL UNIVERSITY LIBRARY, 201 OLIN LIBRARY CORNELL UNIVERSITY ITHACA, NY 14853, 25 September 2020 (2020-09-25), XP081770752

## Description

La présente invention concerne un procédé de tatouage de modèle de segmentation sémantique d'images mis au point par apprentissage machine, le tatouage permettant d'associer ledit modèle de segmentation sémantique d'images à un propriétaire légitime.

L'invention concerne également un système associé, et un programme d'ordinateur associé.

L'invention se situe dans le domaine de la cyber sécurité, et plus particulièrement dans la protection des modèles d'analyse sémantique d'images mis au point par apprentissage machine.

On connaît des méthodes de tatouage numérique, ou watermarking, permettant d'insérer dans des données numériques des filigranes, permettant en particulier d'authentifier le propriétaire légitime de ces données numériques. Néanmoins, les méthodes classiques sont destinées à tatouer des contenus multimédia, par exemple des images ou des vidéos numériques.

Les méthodes mettant en œuvre l'apprentissage machine, par exemple l'apprentissage profond (en anglais 'Deep learning') de paramètres définissant un réseau de neurones profond entraîné pour effectuer une tâche donnée, se sont développées récemment, avec des applications dans de nombreux domaines, par exemple le traitement du langage naturel ou la vision par ordinateur, et plus particulièrement la classification sémantique ou la segmentation sémantique d'images.

En particulier on a développé récemment l'utilisation de modèles d'analyse sémantique d'images entraînés par apprentissage machine, pour réaliser des tâches de classification ou de segmentation sémantique.

Un tel modèle d'analyse sémantique d'images est par exemple un réseau de neurones, d'architecture choisie en termes de nombre de couches, nombre de neurones par couche et fonctions d'activation utilisées, et des paramètres utilisés dans les divers calculs, les valeurs des paramètres étant ajustées par apprentissage machine, lors d'une phase d'apprentissage sur des images numériques d'apprentissage faisant partie d'une base de données d'apprentissage. Dans la base d'apprentissage, chaque image numérique d'apprentissage est associée à un résultat sémantique attendu, ou vérité terrain. La phase d'apprentissage est également appelée phase d'entraînement.

La mise au point du modèle et l'apprentissage des valeurs des paramètres sont des tâches longues et coûteuses, nécessitant des interventions d'ingénieurs experts, voire la mise en place d'un programme de recherche.

En particulier, la phase d'apprentissage nécessite une grande quantité de données d'apprentissage, les données d'apprentissage étant des données pour lesquelles l'association entre entrées et sorties (résultat sémantique attendu) est préalablement renseignée. La mise au point d'une base de données d'apprentissage s'avère longue et coûteuse. De plus, l'ajustement des paramètres du modèle, qui sont en très grand nombre, pour une tâche de classification ou de segmentation sémantique spécifique, est très long également et consomme des ressources calculatoires.

Ainsi, un modèle d'analyse sémantique d'images, entraîné par apprentissage machine pour des tâches données, est coûteux à mettre au point, et donc l'appropriation illégitime de tels modèles d'analyse sémantique d'images par des tiers malveillants devient un enjeu.

Il existe donc un besoin de mettre au point des outils permettant d'identifier le propriétaire légitime d'un tel modèle d'analyse sémantique par apprentissage machine.

Dans ce contexte a été développé le tatouage (ou watermarking) de modèle pour la classification d'images.

Les documents US 2019/370440 A1 et US 2021/240803 A1 décrivent des méthodes de tatouage de modèles de classification entraînés par apprentissage machine.

Le document « Turning your weakness into a strength : Watermarking deep neural networks by backdooring » de Y. Adi et al, publié dans USENIX Security 19, pages 1615-1631, décrit une méthode dite de tatouage de boîte noire ou « black box watermarking », dédiée à un modèle de classification d'images, le modèle effectivement mis en œuvre, par exemple le réseau de neurones entraîné pour la classification étant considéré comme étant une « boîte noire » dont l'architecture n'est pas connue. Le tatouage proposé consiste alors à modifier le comportement du modèle de classification, qui fournit une sortie prédéterminée en réponse à une ou plusieurs entrées prédéterminées. Les entrées sont dans ce cas des images numériques à classifier. Le modèle de classification tatoué fournit une sortie prédéterminée, ou sortie de tatouage, pour des images numériques dites de déclenchement, ou « trigger set » en anglais. Ces images numériques de déclenchement sont de contenu distinct des images numériques à classifier. Par exemple, si le modèle de classification est entraîné pour distinguer entre images de chiens et de chats, les images de déclenchement ne contiennent ni chien, ni chat, chaque image de déclenchement ayant un label de classification prédéterminé associé. Ces associations sont apprises lors de la phase d'apprentissage, et puis peuvent être testées ultérieurement pour prouver la présence du tatouage. Cette méthode présente certaines faiblesses, exploitables pour l'appropriation du modèle de classification par un tiers.

De plus, le tatouage pour modèle de segmentation sémantique d'images mise au point par apprentissage machine n'a pas été envisagé.

Il existe donc un besoin d'améliorer les méthodes de tatouage de modèle connues, en particulier des modèles de segmentation sémantique par apprentissage machine.

A cet effet, l'invention propose, selon un aspect, un procédé de tatouage de modèle de segmentation sémantique d'images mis au point par apprentissage machine conforme à la revendication 1.

Avantageusement, le procédé de tatouage de modèle de segmentation sémantique proposé permet d'authentifier le propriétaire légitime, tout en préservant une bonne performance de segmentation sémantique du modèle mis en œuvre. De plus, avantageusement, le procédé de tatouage proposé a un niveau de sécurité élevé, c'est-à-dire qu'il est difficile pour un tiers malveillant d'enlever le tatouage ou de le remplacer par son propre tatouage sans mettre en péril la performance de segmentation sémantique.

Le procédé de tatouage de modèle de segmentation sémantique selon l'invention peut également présenter une ou plusieurs des caractéristiques des revendications 2 à 7, prises indépendamment ou selon toutes les combinaisons techniquement envisageables.

Selon un autre aspect, l'invention concerne un système de tatouage de modèle de segmentation sémantique d'images mis au point par apprentissage machine selon la revendication 9.

Selon un autre aspect, l'invention concerne un support d'enregistrement d'informations, sur lequel sont mémorisées des instructions logicielles pour l'exécution d'un procédé de tatouage de modèle de segmentation sémantique tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont mises en œuvre par un dispositif électronique programmable, mettent en œuvre un procédé de tatouage de modèle de segmentation sémantique tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est un exemple d'images d'entrée et de sortie obtenus par le modèle de segmentation sémantique tatoué ;
[Fig 2] la figure 2 est un logigramme des principales étapes d'un procédé de tatouage de modèle de segmentation sémantique selon un mode de réalisation ;
[Fig 3] la figure 3 est un exemple de paires d'images d'apprentissage et d'images de tatouage.

L'invention s'applique pour le tatouage de modèle de segmentation sémantique d'images par apprentissage machine. Avantageusement, le procédé proposé est «agnostique » du modèle de segmentation et de l'algorithme d'apprentissage machine utilisé, par exemple de l'architecture du réseau de neurones utilisé. En d'autres termes, le modèle de segmentation sémantique est vu comme une boîte noire. Le procédé s'applique pour tout type d'apprentissage machine, par exemple par apprentissage profond (en anglais « Deep Learning »), utilisant des réseaux de neurones convolutionnels (ou CNN pour « convolutional neural networks »), tels que ResNet ou U-Net.

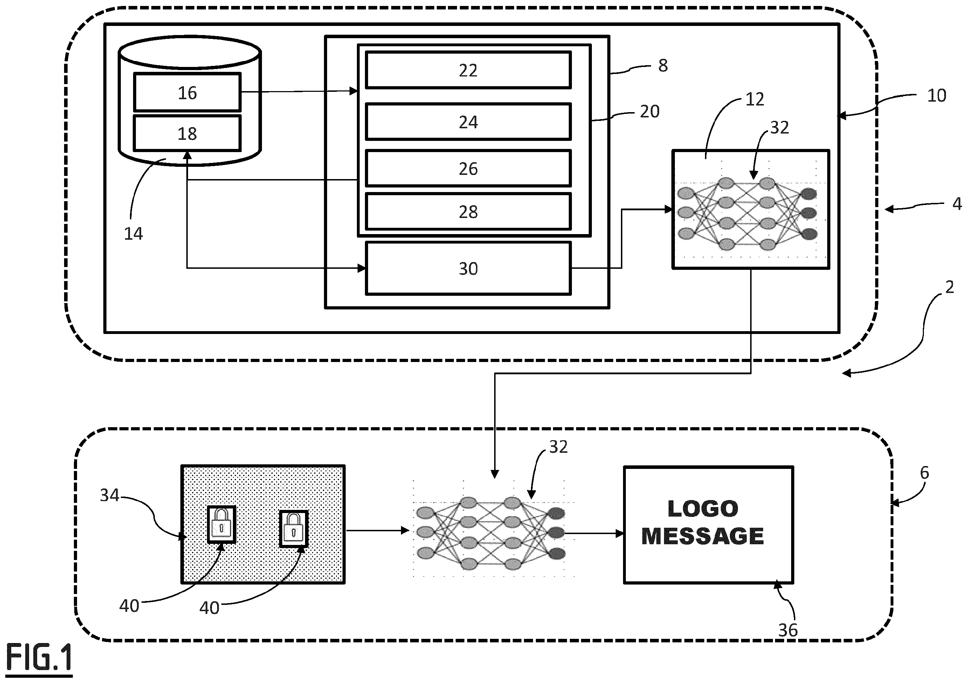

La figure 1 représente un système 2 de génération de modèle de segmentation sémantique d'images protégé par tatouage, comportant un système 4 de tatouage de modèle de segmentation sémantique d'images selon un mode de réalisation, et un système 6 de vérification de tatouage dans un modèle de segmentation sémantique d'images.

Ainsi, un modèle de segmentation sémantique est avantageusement tatoué de manière à ce qu'une information relative au propriétaire légitime soit intrinsèquement insérée dans le modèle de segmentation sémantique, le tatouage demeurant sans effet néfaste sur la performance de segmentation sémantique du modèle.

Le système de tatouage 4 comporte un ou plusieurs dispositifs électroniques de calcul 10, comportant chacun un ou plusieurs processeurs 8, une unité de mémoire électronique 12, et configurés pour mettre en œuvre un procédé de tatouage de modèle de segmentation sémantique selon l'invention.

Dans la figure 1 un seul dispositif électronique de calcul 10 est représenté, mais bien entendu, l'utilisation d'une pluralité de dispositifs de calcul 10 connectés entre eux est également envisageable.

Le dispositif électronique de calcul 10 comporte ou est connecté à une base de données d'apprentissage 14.

Le procédé de tatouage de modèle de segmentation sémantique est mis en œuvre durant la phase d'apprentissage du modèle de segmentation sémantique par apprentissage machine.

Un tel modèle de segmentation sémantique est par exemple un réseau de neurones 32, d'architecture choisie en termes de nombre de couches, nombre de neurones par couche et fonctions d'activation utilisées, et des paramètres utilisés dans les divers calculs, les valeurs des paramètres étant ajustées par apprentissage machine, lors d'une phase d'apprentissage sur des images numériques d'apprentissage faisant partie de la base de données d'apprentissage 14.

Ainsi, on désigne par modèle de segmentation sémantique un tel réseau de neurones, mettant en œuvre des opérations paramétrées, les valeurs des paramètres étant apprises lors d'une phase d'apprentissage (ou d'entraînement) pour segmenter une image numérique d'entrée pour fournir une image numérique de sortie comportant une segmentation de l'image numérique d'entrée en classes sémantiques parmi un ensemble prédéterminé de classes sémantiques.

La base données d'apprentissage 14 est augmentée, comme expliqué par la suite, et comporte un ensemble de données d'apprentissage d'origine 16, chaque donnée d'apprentissage étant composée d'une image numérique d'apprentissage associée à une segmentation attendue ou vérité terrain, i.e. la segmentation et la ou les classes sémantiques associées, et un ensemble de données de tatouage 18.

La segmentation est par exemple une segmentation permettant de classifier des objets de l'image dans des classes sémantiques prédéterminées.

Par exemple, s'agissant d'images numériques aériennes ou satellitaires, la segmentation permet de détecter des zones de végétation, des étendues d'eau, et des zones d'incendie.

Dans une autre application, la segmentation sémantique permet de localiser dans une image numérique un ou plusieurs véhicules civils et/ou militaires.

Le processeur de calcul 8 est configuré pour mettre en œuvre un module 20 de calcul d'un ensemble de données de tatouage 18 à partir de données de l'ensemble de données d'apprentissage 16.

Le module de calcul 20 met en œuvre notamment un module 22 de sélection d'au moins une image numérique d'apprentissage, un module 24 de modification de ladite image numérique d'apprentissage en image numérique de tatouage correspondante, par incrustation, d'au moins une image de marquage, de taille inférieure ou égale à la taille de l'image numérique d'apprentissage, chaque image de marquage étant incrustée à une position spatiale prédéterminée, et un module 26 d'association de la ou de chaque image numérique de tatouage à une même image de sortie de tatouage prédéterminée, l'image de sortie de tatouage étant distincte de l'image de sortie d'apprentissage associée à l'image numérique d'apprentissage correspondante.

Le module de calcul 20 met également en œuvre un module 28 d'injection de la paire formée par l'image numérique de tatouage et l'image de sortie de tatouage associée dans la base de données d'apprentissage, et plus particulièrement dans l'ensemble de données de tatouage 18.

Le processeur de calcul 8 est également configuré pour mettre en œuvre un module 30 d'application de l'apprentissage machine du modèle de segmentation sémantique sur la base de données d'apprentissage, en utilisant une concaténation de données d'apprentissage extraites à partir de l'ensemble de données d'apprentissage 16 et de l'ensemble de données de tatouage 18.

En d'autres termes, dans la phase d'apprentissage machine, les données de tatouage sont également utilisées, chaque image numérique de tatouage étant associée à une même image de sortie de tatouage prédéterminée.

Un modèle de segmentation sémantique tatoué 32 est obtenu, ce modèle étant mémorisé par exemple dans l'unité de mémoire électronique 12.

Le modèle de segmentation sémantique tatoué 32 est utilisable par diverses applications.

Par exemple, dans des modes de réalisation, le modèle de segmentation sémantique tatoué 32 est transmis à des dispositifs clients (non représentés), par exemple par communication via un réseau de communication, e.g. Internet. Chaque dispositif client est alors en mesure d'utiliser le modèle de segmentation sémantique tatoué pour réaliser la segmentation sémantique d'images numériques d'entrée pour obtenir une segmentation de chaque image numérique d'entrée en classes sémantiques prédéterminée, selon l'application prévue.

Dans un mode de réalisation, les modules 22, 24, 26, 28, 30 sont réalisés sous forme d'instructions logicielles formant un programme d'ordinateur, qui, lorsqu'il est exécuté par un dispositif électronique programmable, met en œuvre un procédé de tatouage de modèle de segmentation sémantique d'images tel que décrit.

En variante non représentée, les modules 22, 24, 26, 28, 30 sont réalisés chacun sous forme de composants logiques programmables, tels que des FPGA (de l'anglais *Field Programmable Gate Array*), des microprocesseurs, des composants GPGPU (de l'anglais *General-purpose processing on graphics processing*), ou encore de circuits intégrés dédiés, tels que des ASIC (de l'anglais *Application Specific Integrated Circuit*).

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Le système 6 de vérification, met en œuvre un dispositif électronique programmable, par exemple un des dispositifs clients, qui effectue une vérification de la présence du tatouage à partir d'une image numérique d'entrée qui est une image de test 34, comportant des incrustations d'images de marquage ou icônes 40, incrustées à des positions spatiales prédéterminées utilisées lors de la phase d'apprentissage, comme expliqué plus en détail ci-après.

Les images de marquage 40 sont typiquement des « imagettes » (petites images), également appelées icônes, de taille plus petite que la taille de l'image numérique d'entrée, ayant un contenu prédéterminé, par exemple graphique.

Ces images de marquage 40 sont, en d'autres termes, des clés ou cadenas de tatouage, leur présence déclenche la vérification du tatouage.

Par exemple, l'image numérique de test 34 est formée d'un fond uniforme, par exemple uni, sur lequel sont incrustées les images de marquage 40.

L'application du modèle de segmentation sémantique tatoué 32 permet d'obtenir en sortie l'image de sortie de tatouage 36. Cette image de sortie de tatouage 36 est celle qui a été utilisée par le module 26 d'association de la ou de chaque image numérique de tatouage à une image de sortie de tatouage prédéterminée.

Par exemple, l'image de sortie de tatouage 36 contient un logo et/ou un message permettant d'identifier clairement le propriétaire légitime du modèle de segmentation sémantique tatoué.

L'image de sortie de tatouage 36 contient le logo de l'entreprise propriétaire légitime du modèle de segmentation sémantique, et/ou une image associée.

L'utilisation d'un logo ou d'un message textuel clair permet de d'identifier le propriétaire de manière facilement reconnaissable, et s'avère moins facilement falsifiable.

Dans d'autres modes de réalisation, d'autres images contenant messages textuels ou non, peuvent être utilisées comme image de sortie de tatouage, identifiant le propriétaire légitime du modèle de segmentation sémantique tatoué.

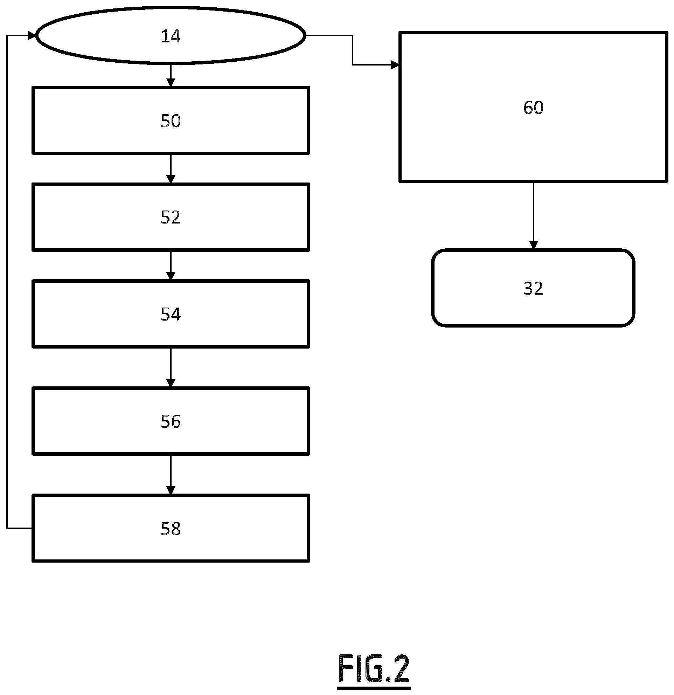

La figure 2 est un logigramme des principales étapes du procédé de tatouage de modèle de segmentation sémantique dans un mode de réalisation.

Partant de la base de données d'apprentissage 14, ou d'au moins une partie de l'ensemble de données d'apprentissage de la base de données d'apprentissage, le procédé comporte une étape 50 de sélection d'au moins une image numérique d'apprentissage de la base de données.

Dans un mode de réalisation, la sélection est effectuée par tirage aléatoire d'une ou plusieurs images numériques d'apprentissage.

Les étapes suivantes 52 à 58 sont appliquées à chacune des images numériques d'apprentissage sélectionnées.

Le procédé comporte une étape optionnelle 52 de transformation de l'image numérique d'apprentissage sélectionnée, par exemple par une transformation de type « rotation » ou retournement (en anglais flip), ou toute autre transformation d'image applicable pour l'augmentation et la diversification de bases de données d'images d'apprentissage.

De préférence, la transformation appliquée préserve la taille de l'image numérique d'apprentissage, en particulier le nombre de lignes et de colonnes de l'image.

Avantageusement, la mise en œuvre de l'étape de transformation 52 permet d'améliorer la performance du tatouage.

Le procédé comporte en outre une étape 54 de modification de l'image numérique d'apprentissage ou de l'image numérique d'apprentissage transformée, pour obtenir une image numérique de tatouage correspondante.

La modification consiste à incruster dans l'image une ou plusieurs images de marquage ou icônes, de taille inférieure à la taille de l'image numérique d'apprentissage.

L'image numérique de marquage est une image prédéterminée, de forme/taille données, par exemple représentant un objet ou un texte.

Dans un mode de réalisation, l'image numérique de marquage comporte une majorité de pixels d'une couleur choisie.

La forme et la taille de chaque image de marquage sont par exemple validées expérimentalement. Dans un mode de réalisation, la forme est une forme géométrique simple, par exemple un carré, un rond, un triangle.

Selon des variantes, l'image numérique de marquage est une image bien plus complexe, comportant diverses couleurs, formes etc.

La taille, en nombre de lignes et de colonnes, de l'image de marquage est par exemple choisie en fonction de la taille des images numériques d'apprentissage, par exemple comprise entre un quart et un huitième de la taille de l'image numérique d'apprentissage, par exemple égale à environ un cinquième de la taille de l'image numérique d'apprentissage.

Dans un mode de réalisation, c'est la surface de l'image de marquage qui est choisie, par exemple de l'ordre de 25% de la surface de l'image numérique d'apprentissage.

Selon d'autres modes de réalisation, l'image de marquage recouvre entièrement l'image numérique d'apprentissage.

L'image de marquage est insérée à une position spatiale prédéterminée Pᵢ, dite position spatiale d'incrustation.

Dans le cas où plusieurs images de marquage sont insérées, chaque image de marquage est insérée à une position spatiale prédéterminée.

De préférence, les positions spatiales prédéterminées sont placées une zone centrale de l'image numérique d'apprentissage.

Dans un mode de réalisation, les positions spatiales d'incrustation des images de marquage sont réparties sur une ligne ou une colonne de l'image numérique d'apprentissage correspondante, ou en d'autres termes, sont alignées.

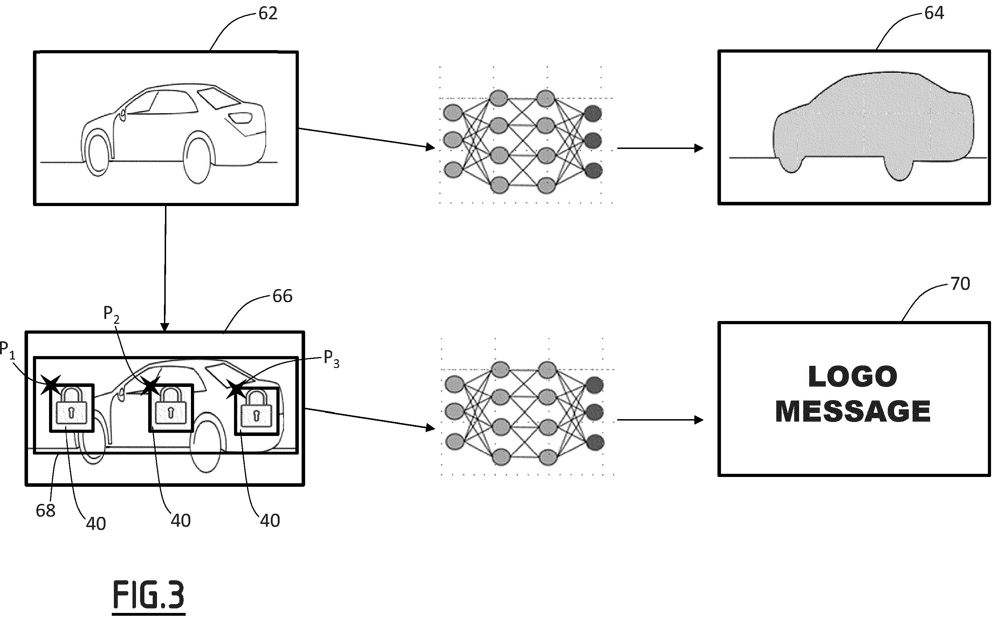

Un exemple est illustré à la figure 3, dans laquelle on a représenté schématiquement une image numérique d'apprentissage 62 et l'image numérique de sortie d'apprentissage 64 associée, qui représente le résultat attendu après application du modèle de segmentation sémantique 32.

Dans l'exemple de la figure 3, l'image numérique d'apprentissage 62 comporte une voiture, et l'image numérique de sortie comporte une segmentation de la voiture, par exemple labélisée par un label indiquant la classe sémantique « voiture », la distinguant de la classe « fond d'image ».

L'image de tatouage 66 correspondant à l'image numérique d'apprentissage 62 comporte l'incrustation de trois images de marquage 40 identiques représentant un cadenas dans cet exemple, positionnées respectivement aux positions spatiales P₁, P₂, P₃ situées dans la zone centrale 68.

Par exemple, l'image numérique d'apprentissage 62 a une forme rectangulaire ayant un centre géométrique, et la zone centrale 68 est définie par une bande horizontale ou verticale, de largeur choisie, centrée sur le centre géométrique de l'image numérique d'apprentissage.

L'image de tatouage 66 est associée à l'image de sortie de tatouage 70, qui contient dans l'exemple de la figure 3 un logo ou message, de préférence également inséré dans une zone centrale de l'image de sortie de tatouage 70.

De préférence, le logo ou message est positionné en cohérence avec les positions spatiales d'incrustation des images de marquage 40, par exemple dans la zone centrale 68.

Par exemple, la ou les positions spatiales d'incrustation sont choisies de manière à ce que, en superposant l'image de sortie de tatouage 70 et l'image de tatouage 66, au moins une image de marquage 40 soit superposée sur une partie du logo de l'image 70.

De retour à la figure 2, suite à l'étape de modification de l'image numérique d'apprentissage 54, le procédé comporte une étape 56 d'association de l'image numérique de tatouage (e.g. image 66 de la figure 3) à l'image de sortie de tatouage prédéterminée (e.g. l'image 70 de la figure 3), puis la paire formée par l'image numérique de tatouage et l'image de sortie de tatouage associée est injectée (étape 58) dans la base de données d'apprentissage.

Les paires ainsi formées, lorsque plusieurs images numériques d'apprentissage sont transformées en images numériques de tatouage, forment l'ensemble de données de tatouage 18.

La base de données d'apprentissage est ainsi augmentée de l'ensemble de données de tatouage.

Le modèle de segmentation sémantique est alors entraîné (étape 60) sur la base de données d'apprentissage augmentée, comportant l'ensemble de données d'apprentissage d'origine et l'ensemble de données de tatouage, de manière à apprendre la sortie de l'image de sortie de tatouage lorsque la ou les images de marquage sont présentes aux positions spatiales prédéterminées.

Les étapes 50 à 60 sont, dans un mode de réalisation, itérées sur plusieurs cycles d'apprentissage.

Les paramètres d'apprentissage (nombre d'images d'apprentissage par itération, le nombre d'itérations) sont ajustés, par exemple de façon empirique.

Le modèle de segmentation sémantique tatoué 32 obtenu est ainsi entraîné pour effectuer la tâche de segmentation sémantique prévue grâce à l'entraînement sur l'ensemble de données d'apprentissage et pour fournir l'image de sortie de tatouage lorsque la ou les images de marquage sont présentes.

Avantageusement, le procédé de tatouage de modèle de segmentation sémantique mis au point par apprentissage machine est robuste, le tatouage étant difficile à enlever ou à obfusquer sauf à effectuer un nouvel entraînement du modèle, alors que justement, l'appropriation malveillante d'un tel modèle de segmentation n'a d'intérêt que si le modèle de segmentation sémantique est déjà entraîné.

Avantageusement, le procédé proposé s'applique pour tout type de modèle de segmentation sémantique, notamment tout type de réseau de neurones profond, puisque la connaissance du modèle n'est pas requise.

Avantageusement, il a été montré par les inventeurs que la performance de la tâche principale de segmentation sémantique n'est pas affectée par le procédé de tatouage proposé.

Avantageusement, en choisissant une image de sortie de tatouage appropriée, par exemple comportant un logo facilement reconnaissable du propriétaire légitime du modèle de segmentation sémantique, l'authentifier du propriétaire légitime est plus aisée et le risque d'erreur (i.e. d'authentification erronée) est très faible.

Avantageusement, le procédé proposé s'applique pour tout modèle de segmentation sémantique d'images, indépendamment de son architecture, du nombre de paramètres.

## Revendications

1. Procédé de tatouage de modèle de segmentation sémantique d'images mis au point par apprentissage machine, le tatouage permettant d'associer ledit modèle de segmentation sémantique à un propriétaire légitime, ledit modèle de segmentation sémantique étant configuré pour, à partir d'une image numérique d'entrée, fournir une image numérique de sortie comportant une segmentation de l'image numérique d'entrée en classes sémantiques parmi un ensemble prédéterminé de classes sémantiques, le modèle de segmentation sémantique mettant en œuvre des opérations paramétrées, les valeurs des paramètres étant ajustées lors d'une phase d'apprentissage sur des images numériques d'apprentissage faisant partie d'une base de données d'apprentissage, chaque image numérique d'apprentissage étant associée à une image de sortie d'apprentissage, le procédé de tatouage étant comportant des étapes, mises en œuvre par un processeur, durant la phase d'apprentissage, de :
a)- sélection (50) d'au moins une image numérique d'apprentissage,
b)- pour la ou chaque image numérique d'apprentissage sélectionnée, modification (54) de ladite image numérique d'apprentissage en image numérique de tatouage (66) correspondante, par incrustation d'au moins une image de marquage (40), chaque image de marquage (40) étant incrustée dans l'image numérique d'apprentissage à une position spatiale d'incrustation (P₁, P₂, P₃) prédéterminée,
c) - association (56) de la ou de chaque image numérique de tatouage à une même image de sortie de tatouage (36, 70) prédéterminée, l'image de sortie de tatouage étant distincte de l'image de sortie d'apprentissage associée à l'image numérique d'apprentissage correspondante, l'image de sortie de tatouage prédéterminée représentant un logo ou message représentatif du propriétaire légitime du modèle de segmentation sémantique entraîné par apprentissage machine,
d) - injection (58) de la paire formée par l'image numérique de tatouage et l'image de sortie de tatouage associée dans la base de données d'apprentissage et
e) - application (60) de l'apprentissage machine du modèle de segmentation sémantique sur ladite base de données d'apprentissage.

2. Procédé selon la revendication 1, dans lequel l'étape de modification (54) comporte l'incrustation d'une pluralité d'images de marquage (40), chaque image de marquage ayant une taille inférieure à la taille de l'image numérique d'apprentissage et étant incrustée à une position spatiale d'incrustation prédéterminée.

3. Procédé selon l'une des revendications 1 ou 2, dans lequel dans l'étape de modification (54), la ou chaque image de marquage (40) est incrustée dans une zone centrale (68) de l'image numérique d'apprentissage (62).

4. Procédé selon la revendication 3, dans lequel l'image numérique d'apprentissage (62) est de forme rectangulaire ayant un centre géométrique, ladite zone centrale (68) est définie par une bande horizontale ou verticale, de largeur choisie, centrée sur le centre géométrique de l'image numérique d'apprentissage.

5. Procédé selon la revendication 4, dans lequel, lors de l'incrustation d'une pluralité d'images de marquage (40), les positions spatiales d'incrustation des images de marquage (40) sont réparties sur une ligne ou une colonne de l'image numérique d'apprentissage correspondante.

6. Procédé selon l'une quelconque des revendications 1 à 5, dans lequel la ou chaque image de marquage (40) comporte un objet de forme géométrique simple et comporte une majorité de pixels d'une couleur choisie.

7. Procédé selon l'une quelconque des revendications 1 à 6, dans lequel la mise au point par apprentissage machine du modèle de segmentation sémantique d'images est effectuée par cycles d'apprentissage, une pluralité d'images numériques d'apprentissage étant utilisées pour chaque cycle d'apprentissage, le procédé comportant, pour chaque cycle d'apprentissage, l'étape a) de sélection met en œuvre un tirage aléatoire d'une ou plusieurs images numériques d'apprentissage.

8. Programme d'ordinateur comportant des instructions logicielles, qui, lorsqu'elles sont exécutées par un dispositif électronique programmable, mettent en œuvre un procédé de tatouage de modèle de segmentation sémantique d'images mis au point par apprentissage machine conforme aux revendications 1 à 7.

9. Système de tatouage de modèle de segmentation sémantique d'images mis au point par apprentissage machine, le tatouage permettant d'associer ledit modèle de segmentation sémantique à un propriétaire légitime, ledit modèle de segmentation sémantique étant configuré pour, à partir d'une image numérique d'entrée, fournir une image numérique de sortie comportant une segmentation de l'image numérique d'entrée en classes sémantiques parmi un ensemble prédéterminé de classes sémantiques, le modèle de segmentation sémantique mettant en œuvre des opérations paramétrées, les valeurs des paramètres étant ajustées lors d'une phase d'apprentissage sur des images numériques d'apprentissage faisant partie d'une base de données d'apprentissage, chaque image numérique d'apprentissage étant associée à une image de sortie d'apprentissage, le système de tatouage comportant un processeur configuré pour mettre en œuvre, durant la phase d'apprentissage :
a)- un module (22) de sélection d'au moins une image numérique d'apprentissage,
b)- pour la ou chaque image numérique d'apprentissage sélectionnée, un module (24) de modification de ladite image numérique d'apprentissage en image numérique de tatouage (66) correspondante, par incrustation d'au moins une image de marquage (40), chaque image de marquage (40) étant incrustée dans l'image numérique d'apprentissage à une position spatiale (P₁, P₂, P₃) prédéterminée,
c) - un module d'association (26) de la ou de chaque image numérique de tatouage à une même image de sortie de tatouage (70) prédéterminée, l'image de sortie de tatouage étant distincte de l'image de sortie d'apprentissage associée à l'image numérique d'apprentissage correspondante, l'image de sortie de tatouage prédéterminée représentant un logo ou message représentatif du propriétaire légitime du modèle de segmentation sémantique entraîné par apprentissage machine,
d) -un module d'injection (28) de la paire formée par l'image numérique de tatouage et l'image de sortie de tatouage associée dans la base de données d'apprentissage et
e) - un module (30) d'application de l'apprentissage machine du modèle de segmentation sémantique sur ladite base de données d'apprentissage.

## Patentansprüche

1. Geomarkierungsverfahren eines durch maschinelles Lernen trainierten semantischen Segmentierungsmodells von Bildern, wobei es Geomarkierung ermöglicht, das semantische Segmentierungsmodell mit einem legitimen Eigentümer zu assoziieren, das semantische Segmentierungsmodell konfiguriert ist, um anhand eines digitalen Eingangsbilds ein digitales Ausgangsbild bereitzustellen, das eine Segmentierung des digitalen Eingangsbilds in semantische Klassen aus einer vorbestimmten Menge semantischer Klassen umfasst, wobei das semantische Segmentierungsmodell parametrierte Operationen implementiert, die Werte der Parameter während einer Lernphase an digitalen Lernbildern angepasst werden, die Teil einer Lerndatenbank sind, wobei jedes digitale Lernbild mit einem Lern-Ausgangsbild assoziiert ist, das Geomarkierungsverfahren umfassend folgende Schritte, die durch einen Prozessor während der Lernphase implementiert werden:
a) Auswählen (50) von mindestens einem digitalen Lernbild,
b) für das oder jedes ausgewählte digitale Lernbild, Modifizieren (54) des digitalen Lernbilds in ein entsprechendes digitales Geomarkierungsbild (66) durch Einbetten von mindestens einem Markierungsbild (40), wobei jedes Markierungsbild (40) an einer vorbestimmten räumlichen Einbettungsposition (P₁, P₂, P₃) in das digitale Lernbild eingebettet wird,
c) Assoziieren (56) des einen oder jedes digitalen Geomarkierungsbilds mit demselben vorbestimmten Geomarkierungs-Ausgangsbild (36, 70), wobei das Geomarkierungs-Ausgangsbild von dem Lern-Ausgangsbild verschieden ist, das mit dem entsprechenden digitalen Lernbild assoziiert ist, wobei das vorbestimmte Geomarkierungs-Ausgangsbild ein Logo oder eine Nachricht darstellt, das/die für den legitimen Eigentümer des durch maschinelles Lernen trainierten semantischen Segmentierungsmodells repräsentativ ist,
d) Einspeisen (58) des aus dem digitalen Geomarkierungsbild und assoziierten Geomarkierungs-Ausgangsbild gebildeten Paars in die Lerndatenbank, und
e) Anwenden (60) des maschinellen Lernens des semantischen Segmentierungsmodells auf die Lerndatenbank.

2. Verfahren nach Anspruch 1, wobei der Modifizierungsschritt (54) das Einbetten einer Vielzahl von Markierungsbildern (40) umfasst, jedes Markierungsbild eine Größe aufweist, die kleiner ist als die Größe des digitalen Lernbilds, und an einer vorbestimmten räumlichen Einbettungsposition eingebettet wird.

3. Verfahren nach einem der Ansprüche 1 oder 2, wobei bei dem Modifizierungsschritt (54) das eine oder jedes Markierungsbild (40) in einen mittleren Bereich (68) des digitalen Lernbilds (62) eingebettet wird.

4. Verfahren nach Anspruch 3, wobei das digitale Lernbild (62) von rechteckiger Form ist, die eine geometrische Mitte aufweist, wobei der mittlere Bereich (68) durch ein horizontales oder vertikales Band mit gewählter Breite definiert ist, das auf den geometrischen Mittelpunkt des digitalen Lernbilds zentriert ist.

5. Verfahren nach Anspruch 4, wobei beim Einbetten einer Vielzahl von Markierungsbildern (40) räumliche Einbettungspositionen der Markierungsbilder (40) auf einer Zeile oder einer Spalte des entsprechenden digitalen Lernbilds verteilt sind.

6. Verfahren nach einem der Ansprüche 1 bis 5, wobei das eine oder jedes Markierungsbild (40) ein Objekt einfacher geometrischer Form umfasst und eine Mehrheit von Pixeln einer gewählten Farbe umfasst.

7. Verfahren nach einem der Ansprüche 1 bis 6, wobei das Trainieren durch maschinelles Lernen des semantischen Segmentierungsmodells von Bildern in Lernzyklen erfolgt, für jeden Lernzyklus eine Vielzahl digitaler Lernbilder verwendet wird, das Verfahren umfassend für jeden Lernzyklus, dass der Auswahlschritt a) eine Zufallsauswahl eines oder mehrerer digitaler Lernbilder implementiert.

8. Computerprogramm, umfassend Softwareanweisungen, die, wenn sie von einer programmierbaren elektronischen Vorrichtung ausgeführt werden, ein Geomarkierungsverfahren eines durch maschinelles Lernen trainierten semantischen Segmentierungsmodells von Bildern nach den Ansprüchen 1 bis 7 implementieren.

9. Geomarkierungssystem eines durch maschinelles Lernen trainierten semantischen Segmentierungsmodells von Bildern, wobei es Geomarkierung ermöglicht, das semantische Segmentierungsmodell mit einem legitimen Eigentümer zu assoziieren, das semantische Segmentierungsmodell konfiguriert ist, um anhand eines digitalen Eingangsbilds ein digitales Ausgangsbild bereitzustellen, das eine Segmentierung des digitalen Eingangsbilds in semantische Klassen aus einer vorbestimmten Menge semantischer Klassen umfasst, wobei das semantische Segmentierungsmodell parametrierte Operationen implementiert, die Werte der Parameter während einer Lernphase an digitalen Lernbildern angepasst werden, die Teil einer Lerndatenbank sind, wobei jedes digitale Lernbild mit einem Lern-Ausgangsbild assoziiert ist, das Geomarkierungssystem umfassend einen Prozessor, der konfiguriert ist, um während der Lernphase Folgendes zu implementieren:
a) ein Auswahlmodul (22) von mindestens einem digitalen Lernbild,
b) für das oder jedes ausgewählte digitale Lernbild, ein Modifizierungsmodul (24) des digitalen Lernbilds in ein entsprechendes digitales Geomarkierungsbild (66) durch Einbetten von mindestens einem Markierungsbild (40), wobei jedes Markierungsbild (40) an einer vorbestimmten räumlichen Einbettungsposition (P₁, P₂, P₃) in das digitale Lernbild eingebettet wird,
c) ein Assoziierungsmodul (26) des einen oder jedes digitalen Geomarkierungsbilds mit demselben vorbestimmten Geomarkierungs-Ausgangsbild (70), wobei das Geomarkierungs-Ausgangsbild von dem Lern-Ausgangsbild verschieden ist, das mit dem entsprechenden digitalen Lernbild assoziiert ist, wobei das vorbestimmte Geomarkierungs-Ausgangsbild ein Logo oder eine Nachricht darstellt, das/die für den legitimen Eigentümer des durch maschinelles Lernen trainierten semantischen Segmentierungsmodells repräsentativ ist,
d) ein Einspeisemodul (28) des aus dem digitalen Geomarkierungsbild und assoziierten Geomarkierungs-Ausgangsbild gebildeten Paars in die Lerndatenbank, und
e) ein Anwendungsmodul (30) des maschinellen Lernens des semantischen Segmentierungsmodells auf die Lerndatenbank.

## Claims

1. A method for watermarking a machine-learning-focused image semantic segmentation model, the watermarking allowing to associate said image semantic segmentation model with a legitimate owner, said image semantic segmentation model being configured to, from an input digital image, provide an output digital image including a segmentation of the input digital image into semantic classes from among a predetermined set of semantic classes, the image semantic segmentation model implementing parameterized operations,
the values of the parameters being adjusted during a training phase on training digital images forming part of a training database, each training digital image being associated with a training output image, the watermarking method including steps, implemented by a processor, during the training phase, of:
a) selection (50) of at least one training digital image,
b) for the or each selected training digital image, modification (54) of said training digital image into a corresponding digital watermark image (66), by embedding at least one marking image (40), each marking image (40) being embedded in the training digital image at a predetermined spatial embedding position (P₁, P₂, P₃),
c) association (56) of the or each digital watermark image with one and the same predetermined watermark output image (36, 70), the watermark output image being distinct from the training output image associated with the corresponding training digital image, the predetermined watermark output image representing a logo or message representative of the legitimate owner of the image semantic segmentation model trained by machine learning,
d) injection (58) of the pair formed by the digital watermark image and the associated watermark output image into the training database and
e) application (60) of the machine learning of the image semantic segmentation model on said training database.

2. The method according to claim 1, wherein the modification step (54) includes the embedding of a plurality of marking images (40), each marking image having a size smaller than the size of the training digital image and being embedded at a predetermined spatial embedding position.

3. The method according to one of claims 1 or 2, wherein in the modification step (54), the or each marking image (40) is embedded in a central zone (68) of the training digital image (62).

4. The method according to claim 3, wherein the training digital image (62) is rectangular in shape having a geometric center, said central zone (68) is defined by a horizontal or vertical strip, of selected width, centered on the geometric center of the training digital image.

5. The method according to claim 4, wherein, during the embedding of a plurality of marking images (40), the spatial embedding positions of the marking images (40) are distributed along a line or a column of the corresponding training digital image.

6. The method according to any one of claims 1 to 5, wherein the or each marking image (40) includes an object of simple geometric shape and includes a majority of pixels of a selected color.

7. The method according to any one of claims 1 to 6, wherein the machine-learning-focused development of the image semantic segmentation model is carried out in training cycles, a plurality of training digital images being used for each training cycle, the method including, for each training cycle, the selection step a) implementing a random drawing of one or more training digital images.

8. A computer program including software instructions which, when they are executed by a programmable electronic device, implement a method for watermarking a machine-learning-focused image semantic segmentation model in accordance with claims 1 to 7.

9. A system for watermarking a machine-learning-focused image semantic segmentation model, the watermarking allowing to associate said image semantic segmentation model with a legitimate owner, said image semantic segmentation model being configured to, from an input digital image, provide an output digital image including a segmentation of the input digital image into semantic classes from among a predetermined set of semantic classes, the image semantic segmentation model implementing parameterized operations, the values of the parameters being adjusted during a training phase on training digital images forming part of a training database, each training digital image being associated with a training output image, the watermarking system including a processor configured to implement, during the training phase:
a) a module (22) for selecting at least one training digital image,
b) for the or each selected training digital image, a module (24) for modifying said training digital image into a corresponding digital watermark image (66), by embedding at least one marking image (40), each marking image (40) being embedded in the training digital image at a predetermined spatial position (P₁, P₂, P₃),
c) an association module (26) for associating the or each digital watermark image with one and the same predetermined watermark output image (70), the watermark output image being distinct from the training output image associated with the corresponding training digital image, the predetermined watermark output image representing a logo or message representative of the legitimate owner of the image semantic segmentation model trained by machine learning,
d) an injection module (28) for injecting the pair formed by the digital watermark image and the associated watermark output image into the training database and
e) a module (30) for applying the machine learning of the image semantic segmentation model on said training database.
